# EUROPEAN PATENT APPLICATION

(11) **EP 1 197 743 A2**
(43) Date of publication of application: **17.04.2002**
(21) Application number: 01000528.8
(22) Date of filing: 09.10.2001
(51) Int. Cl.: G01N 21/65

(54) **Optical measuring head and method of manufacturing optical measuring head**

(30) Priority: 12.10.2000 FI 20002250
(71) Applicant: Valtion Teknillinen Tutkimuskeskus, 02044 VTT (FI)
(72) Inventor: Niemelä, Pentti, 90940 Jääli (FI); Suhonen, Janne, 90550 Oulu (FI); Sumen, Juha, 90540 Kempele (FI)
(74) Representative: Karppinen, Olavi Arto

(57) **Abstract**

The invention relates to an optical measuring head for measuring a Raman spectrum and to a method of manufacturing an optical measuring head. The measuring head comprises a first optical fibre means (202) for guiding radiation causing a Raman excitation to an object (220) being measured, a second optical fibre means (218) for guiding the optical radiation from the object (220) being measured for measuring, and a high-pass filter (216) that is made of a semi-conducting material for filtering the optical radiation causing a Raman excitation from the radiation received from the object (220) being measured before the radiation propagates to the second optical fibre means (218). A desired cut-on wavelength is adjusted for the high-pass filter (216) by changing the thickness or impurity content of the high-pass filter (216).

## Description

### FIELD OF THE INVENTION

The invention relates to a measuring head suited for measuring optical phenomena and especially for measuring Raman scattering.

### BACKGROUND OF THE INVENTION

In an induced optical phenomenon, such as Raman scattering, an inducing radiation makes the object being measured radiate on a different wavelength than the inducing radiation. The wavelengths of the induced radiation from the object being measured are at least partly close to the wavelength of the inducing radiation and the intensity of the induced radiation is usually very much lower than the intensity of the inducing radiation. Measuring such an optical phenomenon is technically demanding, because the inducing radiation reflected or scattered with an unchanged wavelength from the object being measured must be eliminated from the radiation coming to the detector without unnecessarily attenuating the induced radiation. In a measuring head used in measuring induced radiation, a steep optical filter, such as an interference filter and holographic narrow-band notch filter, is used to eliminate the inducing radiation.

There are, however, problems involved in the use of both the interference filter and the holographic narrow-band notch filter in a measuring head. The filters only operate on collimated radiation and even a small deviation in the angle of incidence of the radiation to the filter produces a change in the wavelength of the stop band of the filter, and this can ruin the measurement of Raman scattering, for instance. It is, however, difficult to install the filter accurately and for instance vibration can alter the angle of incidence of the radiation to the filter (the filter moves or some other optical component moves). Such an angle dependency is an especially difficult problem in a holographic notch filter. The interference filter has the additional problem that several interference filters are generally required to achieve an adequate attenuation on the band-stop wavelength.

### BRIEF DESCRIPTION OF THE INVENTION

It is an object of the invention to provide an improved measuring head so as to reduce the above-mentioned problems. This is achieved by an optical measuring head for measuring a Raman spectrum that comprises at least two optical fibre means. In addition, the measuring head comprises a first optical fibre means for guiding radiation causing a Raman excitation to an object being measured, a second optical fibre means for guiding the optical radiation from the object being measured for measuring, and a high-pass filter that is made of a semi-conducting material that absorbs a direct bandgap for filtering the optical radiation causing the Raman excitation from the radiation received from the object being measured before the radiation propagates to the second optical fibre means.

The invention also relates to a method of manufacturing an optical measuring head for measuring a Raman spectrum, the measuring head comprising at least two optical fibre means. The manufacturing method comprises the steps of connecting the first optical fibre means to guide radiation causing a Raman excitation to an object being measured, connecting the second optical fibre means to guide the optical radiation from the object being measured for measuring, and selecting as a high-pass filter a semi-conducting material that absorbs a direct bandgap for filtering the optical radiation causing a Raman excitation from the radiation received from the object being measured before the radiation propagates to the second optical fibre means, and adjusting a desired cut-on wavelength to the high-pass filter by altering the thickness of the high-pass filter.

The invention also relates to a method of manufacturing an optical measuring head for measuring a Raman spectrum, the measuring head comprising at least two optical fibre means. The manufacturing method comprises the steps of connecting the first optical fibre means to guide radiation causing a Raman excitation to an object being measured, connecting the second optical fibre means to guide the optical radiation from the object being measured for measuring, and selecting as a high-pass filter a semi-conducting material that absorbs a direct bandgap for filtering the optical radiation causing a Raman excitation from the radiation received from the object being measured before the radiation propagates to the second optical fibre means, and adjusting a desired cut-on wavelength to the high-pass filter by altering the impurity content of the high-pass filter.

Preferred embodiments of the invention are disclosed in the dependent claims.

The invention is based on the idea that to eliminate reflected exciting radiation, a high-pass filter is used that is made of a semi-conducting material and has a high attenuation on the stop band and a good transmittance on the transmission band. In addition, the shift from the transmission band to the stop band is steep.

The solution of the invention provides several advantages. Installing a filter that eliminates inducing radiation from measurements to the measuring head is not precision work. Because the operation of the filter is based on absorption, it is not sensitive to the angle of incidence of radiation. This makes reliable operation possible. In addition, the filter filtering inducing radiation need not be in collimated radiation, which makes it possible to construct different measuring head constructions even without collimating lenses. In addition, efficient filtering is possible with one filter.

### BRIEF DESCRIPTION OF THE FIGURES

The invention will now be described in greater detail by means of preferred embodiments and with reference to the attached drawings in which
Figure 1 shows a measuring head according to prior art,
Figure 2A shows a measuring head employing a high-pass filter made of a semi-conducting material,
Figure 2B shows a measuring head employing a high-pass filter made of a semi-conducting material,
Figure 3A shows a measuring head, in which the fibre guiding exciting radiation is on the optical axis of the measuring head,
Figure 3B shows an optical arrangement in the measuring head, in which the fibre guiding exciting radiation is on the optical axis of the measuring head,
Figure 4 shows a measuring head without a lens,
Figure 5 shows fastening a high-pass filter to a support structure,
Figure 6 shows fastening a high-pass filter to a support structure,
Figure 7 shows the transmission curves of high-pass filters having different thickness, and
Figure 8 shows a measuring arrangement.

### DETAILED DESCRIPTION OF THE INVENTION

The presented measuring head is especially well suited for measuring Raman scattering without being restricted to it, however.

Let us first examine a measuring head 100 according to prior art. Optical radiation is brought along an optical fibre 102 to the measuring head 100 and causes Raman scattering in an object 120 being measured. The optical radiation is usually monochromatic laser radiation on a desired wavelength. The optical radiation from the fibre 102 is collimated by a lens 104, after which the optical radiation is band-pass-filtered in a filter 106 to eliminate Raman scattering components possibly formed in the optical fibre 102 and other wavelengths deviating from the desired wavelength. After this, the optical radiation is by means of a mirror 108 reflected to a partially reflecting mirror 110 that directs the optical radiation towards the object 120 being measured through a lens 112 that focuses the optical radiation to the object 120 being measured. The optical radiation directed to the object 120 being measured both Rayleigh scatters and reflects from the object 120 being measured and produces Raman scattering in the object 120 being measured. The wavelength of the radiation directed to the object being measured does not change during the reflection and Rayleigh scattering. During the Raman phenomenon, generally a small part of the optical radiation scattered from the object being measured deviates in its wavelength from the wavelength of the radiation directed to the object being measured. Each wavelength deviation corresponds in its frequency to the vibration frequencies characteristic of the constitution of the object being measured. The lens 112 collects and collimates both the radiation unchanged in wavelength and the Raman scattered radiation. The collimated optical radiation propagates through the partially transmitting mirror to a filter 114 that eliminates the optical radiation unchanged in its wavelength, and the Raman radiation remains. The filter 114 is a prior-art holographic filter based on Bragg's diffraction or an interference filter. The mirror 110 can also be a wavelength-selective component, such as a narrow-band notch filter. The collimated Raman radiation propagates to a lens 116 that focuses the Raman radiation to a fibre 118 leading to spectroscopic measurements.

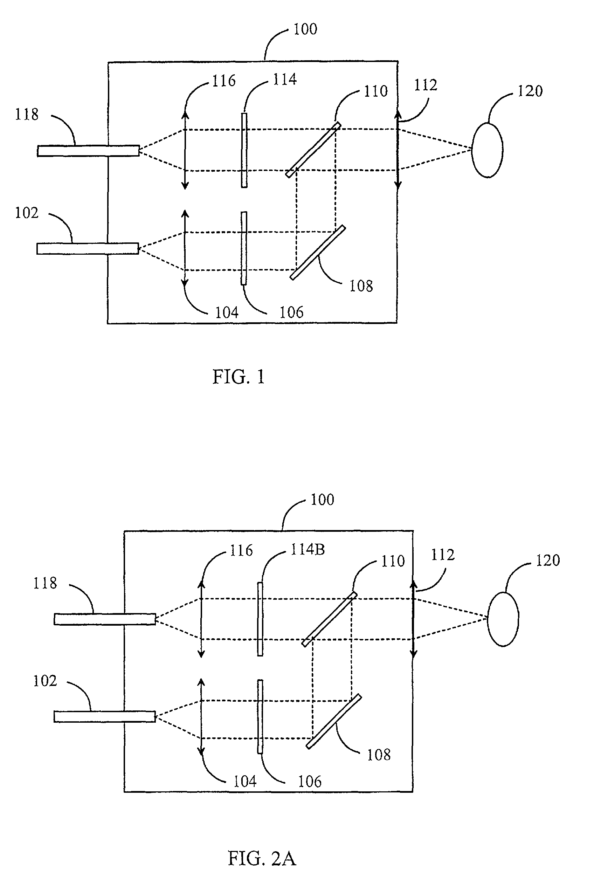

The measuring head of the present solution is at its simplest otherwise similar to the measuring head of Figure 1, but the filter 114 is replaced by semi-conducting filter 114B absorbing a direct bandgap, as shown in Figure 2A.

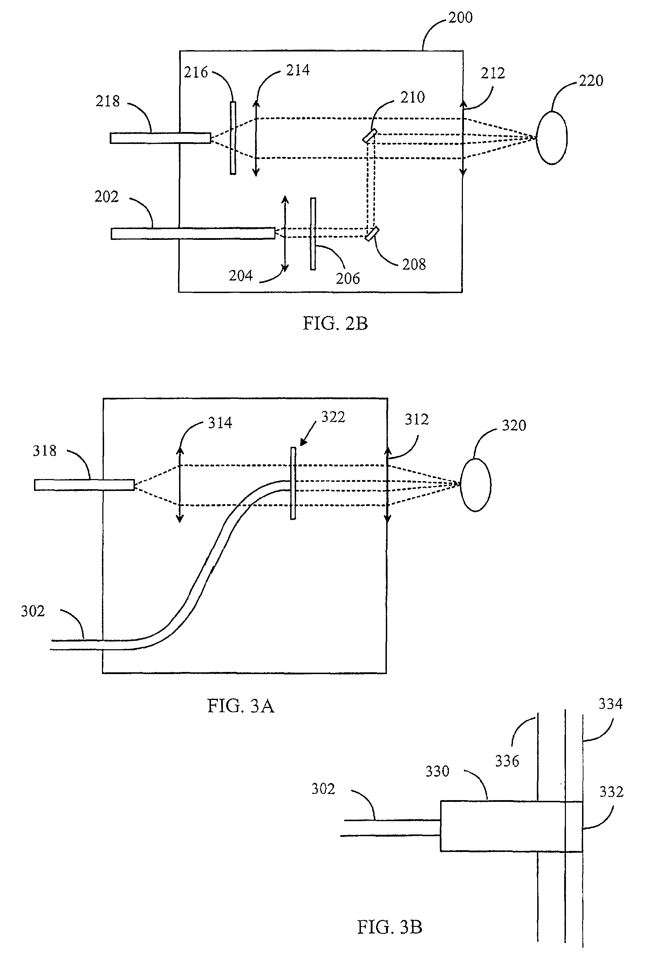

A second embodiment of the measuring head is the measuring head of Figure 2B. The transmission and reception optics are combined in this measuring head in a similar manner to the solution of Figure 1. Optical radiation is directed to an object 220 being measured by means of the transmission optics and the optical radiation from the object being measured is received by means of the reception optics. Optical radiation is brought to the measuring head 200 along an optical fibre or fibre bundle 202 from an optical power source (not shown in Figure 2) and the radiation excites the measuring object and produces a Raman phenomenon. Optical radiation, which in this application is electromagnetic radiation having a wavelength of 40 nm to 1 mm, is usually monochromatic radiation produced by a laser on a desired wavelength. The optical radiation diverged from the fibre 202 is collimated by a lens 204. The collimated radiation is band-pass-filtered in a filter 206 to eliminate any harmful wavelengths deviating from the desired wavelength. After this, the optical radiation is reflected by means of a mirror 208 to a partially reflecting mirror 210 that directs the optical radiation towards the object 220 being measured through a lens 212 that focuses the optical radiation to the object 220 being measured. The mirror 210 can also be a dichromatic beam splitter instead of a partially transmitting mirror. Like in the case of Figure 1, the optical radiation directed to the object 220 being measured both Rayleigh scatters and reflects from the object 220 being measured and produces an excitation according to a Raman phenomenon in the object 220 being measured. Both the radiation unchanged in its wavelength and the Raman-scattered radiation are collected and collimated by the lens 212. The collimated optical radiation propagates through the mirror 210 or past it, if the mirror 210 is small, to a second lens 214 that focuses the radiation to a fibre or fibre bundle 218 leading to spectroscopic measurements. Before propagating into the fibre 218, the focused radiation is, however, high-pass-filtered by a filter 216 that eliminates the optical radiation that is unchanged in its wavelength, and the Raman radiation remains. The filter 216 is made of a semi-conducting material absorbing a direct bandgap, whose pass and stop band limit of optical radiation is based on the size of a prohibited zone, i.e. energy gap. The attenuation of the semi-conducting material on its stop band is nearly infinite (over 10 OD) and thus no other filters are required to eliminate the exciting radiation. On the other hand, a semi-conductor filter allows good transmission to its pass band. The area between the stop and pass bands is narrow and depends on the thickness of the material. A suitable filter material in the 830-nm range, for instance, is cadmium telluride (CdTe).

Figures 3A and 3B show a solution that avoids using mirrors, integrates the transmission optics and reduces the size of the measuring head. Radiation from a spectrometer arrives along a fibre 302 to an optical arrangement 322 that is on the optical axis of the measuring head. The optical arrangement 322 is described in greater detail in Figure 3B. From the optical arrangement 322, the collimated radiation propagates through a notch filter in the optical arrangement 322 to a lens 312 that focuses the radiation to an object 320 being measured. The radiation from the object 320 being measured is collected and collimated by a lens 312. A lens 314 focuses the radiation on a fibre 318.

Figure 3B shows the optical arrangement 322. At the end of the fibre 302, there is a GRIN (GRaded INdex) lens 330 that collimates the radiation from the fibre 302. Before the GRIN lens 330, there is a notch filter 332 for eliminating other wavelengths or wavelength bands than the desired one. The radiation from the object being measured and collimated by the lens 312 is high-pass-filtered by a filter 334. The filter 334 can be supported to a support structure 336 that is transparent on the wavelength band being measured. Because the high-pass filter 334 is at the front of the measuring head, it stops exciting radiation from entering to a large extent inside the measuring head. This facilitates the material selection for the measuring head, because exciting radiation can induce fluorescence radiation in glass and anodised aluminium, for instance, that reduces the efficiency of the measuring head and the entire optical measurement. In this case, too, the high-pass filter can reside in front of the fibre 318 instead of in the optical arrangement 322, as shown in Figure 2, but the exciting radiation can then induce harmful wavelengths in the measuring head.

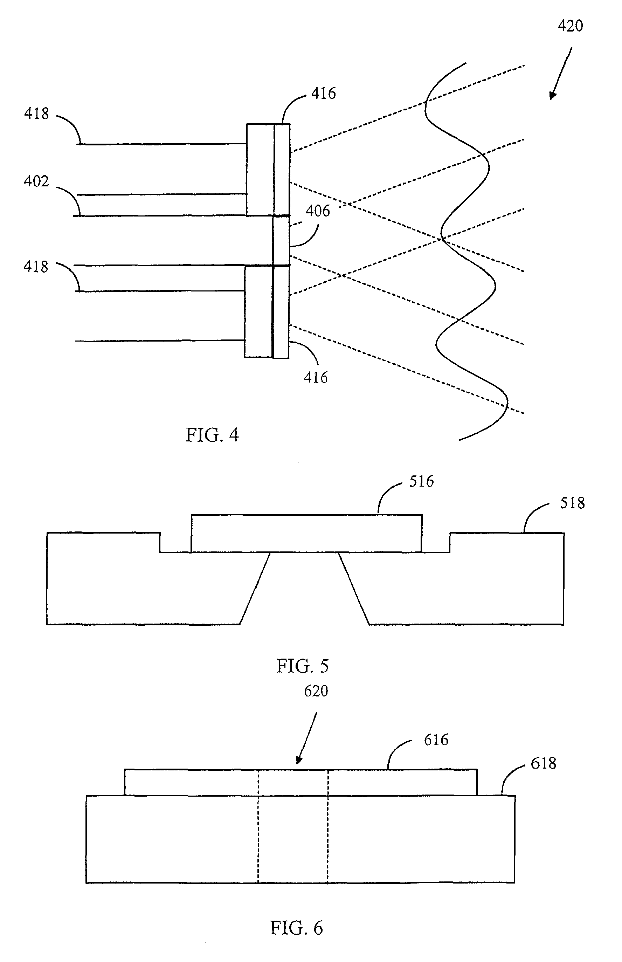

Figure 4 shows another possible structural solution for the measuring head. The exciting radiation is fed to an object 420 being measured through a fibre 402 having a notch filter 406 at its end. The exciting radiation diverges at the opening angle of the fibre towards the object 420 being measured. Raman radiation arrives from the object 420 being measured through a high-pass filter 416 to reception fibres 418 widely from the entire sector of the opening angle and the reception fibres 418 guide the radiation on to spectroscopic measurements. Especially the fibres 418 receiving radiation can form a fibre bundle that is around the guiding fibre 402. In addition, the fibre 402 guiding the exciting radiation can also be replaced by a fibre bundle. The ends of the fibres 418 can be slightly oblique, whereby the reception direction of the fibres collecting radiation from the object being measured can be directed towards the area lighted by the exciting radiation. A holographic notch filter or interference filter cannot be used in place of the high-pass filter 416, because the radiation arriving at the filter 416 is not collimated in this case.

Let us now examine the fastening of the high-pass filter to a support structure, because this is required when the filter disc is worked and fastened firmly to the optical axis of the measuring head. Because most high-pass filter materials are fragile and easily break when worked, the support structure makes it possible to grind the filter disc thinner than would be possible without the support structure.

Figure 5 shows a method of fastening the high-pass filter to a support structure. A notch filter 516 can be glued to the support structure 518 made of Kovar material, for instance. Kovar material provides the advantage that its thermal expansion coefficient is close to that of CdTe material, for instance. This type of fastening can be used when grinding the filter disc thinner or when using it in the measuring head of Figure 2. In the measuring head of Figure 2, the cross-sectional area of the focused radiation can be quite small (a few square millimetres or smaller) and correspondingly, the area of the high-pass filter can also be small, which makes it possible to grind the high-pass filter disc thin (even only 0.1 mm).

Figure 6 shows a second method for fastening the high-pass filter to a support structure. This structure corresponds to the structure of Figure 5, but in the solution of Figure 6, the area of the high-pass filter can be larger or the filter thinner than in the solution of Figure 5. If the solution of Figure 6 is used in the optical arrangement of Figure 3A, a hole 620 can be made in the middle of both the support structure 618, which is glass, and the high-pass filter 616. When the high-pass filter is used in such a manner that the radiation from the object being measured first hits the high-pass filter disc 616, the support structure 618 can be made of ordinary glass and the high-pass filter 616 can be fastened to the glass plate 618 with ordinary optical glues known per se without the glue or the glass causing fluorescence or other induced radiation harmful to the measurement.

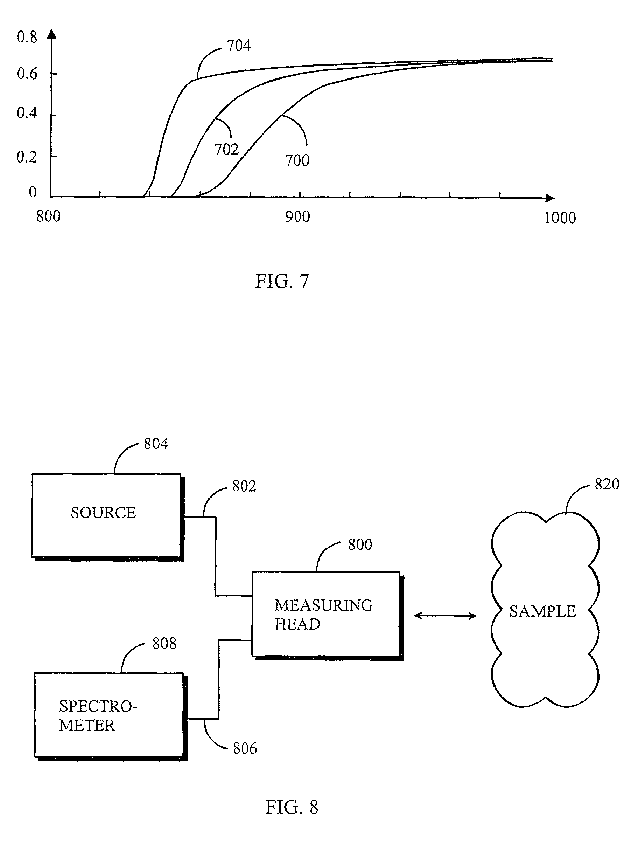

Let us now examine more closely the effect of the thickness of the high-pass filter on the optical properties of the high-pass filter. The material of the high-pass filter is made in a manner known per se in the manufacturing process of a semi-conducting material. The thickness of the high-pass filter affects the cut-on wavelength, i.e. on which wavelength the high-pass filter starts to let radiation through (this is shown in more detail in Figure 7). The high-pass filter is preferably a disc and the disc can be ground to a desired thickness. Grinding often damages the surface of the disc and possibly also causes tension in the material. Surface damage can be reduced by etching the surface of the disc chemically. Material tension can be reduced or eliminated by heat treatment that can be done for instance by radiation (heat lamp) instead of conventional heating. The cut-on wavelength can also be affected by doping impurities into the semi-conducting material. Both the thickness of the filter disc and the doping then affect the cut-on wavelength. Pure semi-conducting materials suitable for a high-pass filter in addition to CdTe include in the 515-nm range cadmium sulphide (CdS), in the 720-nm range cadmium selenide (CdSe), in the 860-nm range gallium arsenide (GaAs), and in the 940-nm range indium phosphide (InP). In addition, materials suitable for a high-pass filter include the following materials obtained by doping from a pure semi-conducting material: in the 785-nm range cadmium zinc telluride (e.g. CdₓZn₁₋ₓTe, x=0.85), gallium arsenic phosphide (e.g. GaAsₓP₁₋ₓ, x=0.85), aluminium gallium arsenide (e.g. Al₁₋ₓGaₓAs, x=0.86), and in the 1064-nm range indium arsenic phosphide (InAs₁₋ₓPₓ, x=0.81) and indium gallium arsenide (e.g. In₁₋ₓGaₓAs, x=0,75).

Figure 7 shows throughput curves of CdTe high-pass filters having different thickness. The vertical axis shows the measured throughput intensity T and the horizontal axis shows the wavelength λ. The lowest curve 700 shows the throughput curve of a 2-mm thick CdTe high-pass filter. According to the curve 700, throughput is very weak on wavelengths shorter than 860 nm, but it increases slowly between 860 and 920 nm, after which throughput remains nearly unchanged, slightly over 60%, up till 1000 nm. The curve 702 shows the throughput curve of a 1-mm thick CdTe high-pass filter. According to the curve 702, throughput is very weak on wavelengths shorter than 850 nm, but it increases slowly between 850 and 900 nm, after which throughput remains nearly unchanged, slightly over 60%, up till 1000 nm. The curve 704 shows the throughput curve of a 0.5-mm thick CdTe high-pass filter. According to the curve 704, throughput is very weak on wavelengths slightly shorter than 840 nm, but it increases quickly between 840 and 850 nm, after which throughput remains nearly unchanged, slightly over 60%, up till 1000 nm. A high-pass filter without an antireflection coating is used in the measurements, but the throughput of a CdTe high-pass filter with an antireflection coating can be over 90%. This shows that the thinner the band-stop disc is, the bigger the change in throughput is between band-passing and band-stopping.

Finally, let us examine a measuring arrangement by means of Figure 8. From a source 804, which is for instance a laser, exciting radiation is fed along a guiding fibre or fibre bundle 802 to a measuring head 800, from which the radiation is directed towards a sample 820. Radiation from the sample 820 is collected by the measuring head 800 and fed to a receiving fibre or fibre bundle 806 that guides the radiation being measured to a spectrometer 808. The measuring head 800 is suitable for use for instance in a CCD (Charge Coupled Device) Raman spectrometer or a FT (Fourier Transform) Raman spectrometer.

Even though the invention has been explained in the above with reference to examples in accordance with the accompanying drawings, it is apparent that the invention is not restricted to them but can be modified in many ways within the scope of the inventive idea disclosed in the attached claims.

## Claims

1. An optical measuring head for measuring a Raman spectrum that comprises at least two optical fibre means (202, 218, 302, 318, 402, 418), **characterized in that** the measuring head comprises
a first optical fibre means (202, 302, 404) for guiding radiation causing a Raman excitation to an object (220, 320, 420) being measured,
a second optical fibre means (218, 318, 418) for guiding the optical radiation from the object (220, 320, 420) being measured for measuring, and
a high-pass filter (216, 334, 416) that is made of a semi-conducting material that absorbs a direct bandgap for filtering the optical radiation causing the Raman excitation from the radiation received from the object (220, 320, 420) being measured before the radiation propagates to the second optical fibre means (218, 318, 418).

2. A measuring head as claimed in claim 1, **characterized in that** the measuring head comprises at least two lenses (212, 214) arranged to focus the radiation from the first fibre means (202, 302, 404) on the object (220, 320, 420) being measured and to receive and direct the radiation from the object (220, 320, 420) being measured to the second fibre means (218, 318, 418).

3. A measuring head as claimed in claim 1, **characterized in that** the high-pass filter (216, 334, 416) of the measuring head resides immediately in front of the second optical fibre means (218, 318, 418).

4. A measuring head as claimed in claim 1, **characterized in that** the filter materials of the high-pass filter (216, 334, 416) are in the 515-nm range cadmium sulphide, in the 720-nm range cadmium selenide, in the 785-nm range cadmium zinc telluride, gallium arsenic phosphide and aluminium gallium arsenide, in the 830-nm range cadmium telluride, in the 860-nm range gallium arsenide, in the 940-nm range indium phosphide, and in the 1064-nm range indium arsenic phosphide and indium gallium arsenide.

5. A measuring head as claimed in claim 1, **characterized in that** the measuring head is arranged to be used in a CCD Raman or FT Raman spectrometer.

6. A measuring head as claimed in claim 1, **characterized in that** the cut-on wavelength of the high-pass filter (216, 334, 416) is made suitable by adjusting the thickness of the high-pass filter.

7. A measuring head as claimed in claim 1, **characterized in that** the cut-on wavelength of the high-pass filter (216, 334, 416) is made suitable by doping impurities in the semi-conducting material.

8. A measuring head as claimed in claim 1, **characterized in that** the high-pass filter (216, 334, 416) is fastened to a support structure that is made of Kovar material or glass.

9. A measuring head as claimed in claim 1, **characterized in that** the high-pass filter (216, 334, 416) is fastened to a glass support structure; the support structure and the high-pass filter (216, 334, 416) have a hole for the first optical fibre means (202, 302, 404) guiding exciting radiation.

10. A method of manufacturing an optical measuring head for measuring a Raman spectrum, the measuring head comprising at least two optical fibre means (202, 218, 302, 318, 402, 418), **characterized by** connecting the first optical fibre means (202, 302, 404) to guide radiation causing a Raman excitation to an object (220, 320, 420) being measured,
connecting the second optical fibre means (218, 318, 418) to guide the optical radiation from the object (220, 320, 420) being measured for measuring, and
selecting as a high-pass filter (216, 334, 416) a semi-conducting material that absorbs a direct bandgap for filtering the optical radiation causing the Raman excitation from the radiation received from the object (220, 320, 420) being measured before the radiation propagates to the second optical fibre means (218, 318, 418), and
adjusting a desired cut-on wavelength to the high-pass filter (216, 334, 416) by altering the thickness of the high-pass filter (216, 334, 416).

11. A method of manufacturing an optical measuring head for measuring a Raman spectrum, the measuring head comprising at least two optical fibre means (202, 218, 302, 318, 402, 418), **characterized by** connecting the first optical fibre means (202, 302, 404) to guide radiation causing a Raman excitation to an object (220, 320, 420) being measured,
connecting the second optical fibre means (218, 318, 418) to guide the optical radiation from the object (220, 320, 420) being measured for measuring, and
selecting as a high-pass filter (216, 334, 416) a semi-conducting material that absorbs a direct bandgap for filtering the optical radiation causing the Raman excitation from the radiation received from the object (220, 320, 420) being measured before the radiation propagates to the second optical fibre means (218, 318, 418), and
adjusting a desired cut-on wavelength to the high-pass filter (216, 334, 416) by altering the impurity content of the high-pass filter (216, 334, 416).

12. A manufacturing method as claimed in claim 10 or 11, **characterized by** manufacturing the high-pass filter (216, 334, 416) of filter materials that are in the 515-nm range cadmium sulphide, in the 720-nm range cadmium selenide, in the 785-nm range cadmium zinc telluride, gallium arsenic phosphide and aluminium gallium arsenide, in the 830-nm range cadmium telluride, in the 860-nm range gallium arsenide, in the 940-nm range indium phosphide, and in the 1064-nm range indium arsenic phosphide and indium gallium arsenide.

13. A manufacturing method as claimed in claim 10 or 11, **characterized by** grinding the high-pass filter (216, 334, 416) and, after grinding, etching the high-pass filter (216, 334, 416) chemically to repair any damage.

14. A manufacturing method as claimed in claim 10 or 11, **characterized by** thermally treating the high-pass filter (216, 334, 416) to reduce tension.

15. A manufacturing method as claimed in claim 10 or 11, **characterized in that** the high-pass filter (216, 334, 416) is fastened to a support structure made of Kovar material or glass.

16. A manufacturing method as claimed in claim 10 or 11, **characterized in that** the high-pass filter (216, 334, 416) is fastened to a glass support structure; a hole is made in the support structure and high-pass filter (216, 334, 416) for the first optical fibre means (202, 302, 404) guiding exciting radiation.
